(19) Europäisches Patentamt / European Patent Office / Office européen des brevets

(11) **EP 3 994 347 B1**

(12) **FASCICULE DE BREVET EUROPEEN**

(45) Date de publication et mention de la délivrance du brevet:
**30.08.2023 Bulletin 2023/35**

(21) Numéro de dépôt: **20737147.7**

(22) Date de dépôt: **03.07.2020**

(51) Classification Internationale des Brevets (IPC):
**F02C 7/232** (2006.01)    **F02C 9/26** (2006.01)

(52) Classification Coopérative des Brevets (CPC):
**F02C 9/263; F02C 7/232; F05D 2270/306;**
F05D 2300/522

(86) Numéro de dépôt international:
**PCT/EP2020/068906**

(87) Numéro de publication internationale:
**WO 2021/001563 (07.01.2021 Gazette 2021/01)**

(54) **DÉTERMINATION DE DENSITÉ DE CARBURANT POUR DOSAGE DE CARBURANT DANS UN CIRCUIT D'ALIMENTATION EN CARBURANT D'UN MOTEUR D'AÉRONEF**

VERFAHREN ZUR BESTIMMUNG DER KRAFTSTOFFDICHTE ZUR KRAFTSTOFFZUMESSUNG IN EINEM KRAFTSTOFFVERSORGUNGSKREISLAUF EINES FLUGZEUGTRIEBWERKS

METHOD FOR DETERMINING THE DENSITY OF FUEL FOR METERING FUEL IN A FUEL SUPPLY CIRCUIT OF AN AIRCRAFT ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.07.2019 FR 1907427**

(43) Date de publication de la demande:
**11.05.2022 Bulletin 2022/19**

(73) Titulaire: **SAFRAN AIRCRAFT ENGINES**
**75015 Paris (FR)**

(72) Inventeurs:
• **JOUDAREFF, Arnaud Bernard Clément Thomas**
  **77550 MOISSY-CRAMAYEL (FR)**
• **PORA, Loïc**
  **77550 MOISSY-CRAMAYEL (FR)**

(74) Mandataire: **Regimbeau**
**20, rue de Chazelles**
**75847 Paris Cedex 17 (FR)**

(56) Documents cités:
**FR-A1- 3 053 396    FR-A1- 3 069 021**

## Description

L'invention concerne de façon générale l'alimentation en carburant de moteurs d'aéronefs, et en particulier de turbomachines.

Elle concerne un procédé de dosage de carburant, ainsi qu'un circuit d'alimentation en carburant d'un moteur d'aéronef.

## Domaine technique général et art antérieur

Les moteurs d'avion sont traditionnellement équipés d'un système spécifique de dosage de carburant, appelé FMU (pour « Fuel Metering Unit ») ou HMU (pour « Hydro Mechanical Unit ») selon les terminologies anglosaxonnes généralement utilisées.

Ce système de dosage remplit plusieurs fonctions. Il sert à réguler le débit de carburant délivré à la chambre de combustion, ainsi qu'à couper le débit de carburant délivré à la chambre de combustion (arrêt moteur), notamment en cas de survitesse (régime moteur dépassant le régime autorisé. Il assure en outre la pressurisation du système carburant du moteur.

Classiquement, un débitmètre massique est interposé entre ce système de dosage FMU et le dispositif d'injection de carburant dans la chambre de combustion.

L'information qu'il fournit est remontée au calculateur de contrôle EEC du moteur, mais n'est aucunement utilisée dans les boucles de régulation du moteur : elle est transmise par l'EEC au calculateur de l'avion en vue d'un affichage cockpit.

L'information de débit dosé utilisée dans la commande du dispositif de dosage FMU est quant à elle généralement obtenue indépendamment de cette mesure de débit fournie par le débitmètre du moteur.

Le débit dosé est en effet habituellement reconstitué en fonction de la position de l'actionneur de dosage, grâce à un capteur de position de type LVDT (Linear Variable Displacement Transducer).

Les valeurs de débit dosé ainsi calculées sont toutefois relativement imprécises.

Les imprécisions les plus importantes sont liées à la variabilité du type de carburant utilisé pour la combustion, ainsi qu'à la plage de température d'utilisation possible pour les carburants.

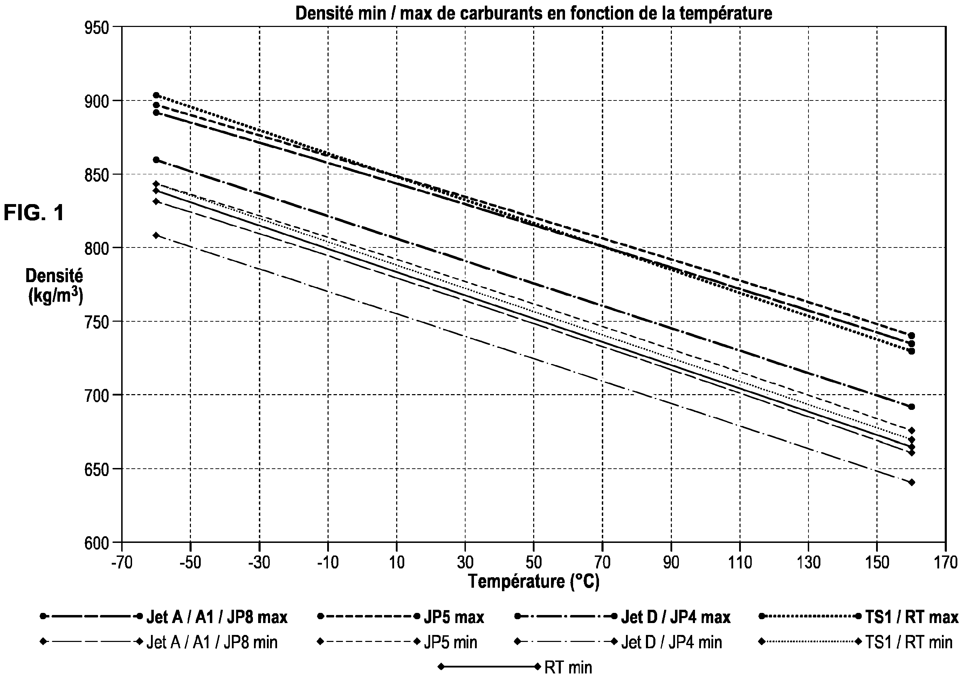

C'est ce qu'illustre la figure 1 sur laquelle on a représenté, en fonction de la température, différentes valeurs de densité de carburant pour différents types de carburant.

Comme on le voit sur cette figure, à basse température, la fluctuation de densité d'un carburant à un autre peut être de près de 12,5 pourcents; elle peut être de près de 15 pourcents à haute température.

Or, il est inhabituel de ne trouver qu'un seul type de carburant dans l'ensemble des réservoirs d'un avion. Les différents aéroports ou centres de maintenance ne sont pas tenus de remplir les réservoirs avec le même carburant que le précédent introduit.

Pour éviter des problèmes d'opérabilité d'un moteur liés à un surdosage ou un sous-dosage du carburant, notamment en phase de démarrage ou de décélération, et plus généralement éviter tout risque de non allumage, d'extinction ou de blocage, les moteurs sont conçus et certifiés pour accepter plusieurs types de carburant à consommer en combustion, et ce sur l'ensemble de la plage de température que les carburants peuvent rencontrer. Il en est de même des circuits carburants ainsi que les équipements inhérents sont également conçus pour être fonctionnels pour les différents carburants envisageables. Ils sont adaptés aux propriétés intrinsèques (densité, pouvoir de lubrification, PCI) de ceux-ci.

Ainsi, les fortes imprécisions sur les débits dosés que les variations de types de carburant et de température peuvent générée, obligent aujourd'hui à un surdimensionnement des moteurs et de leurs équipements.

Il est aussi connu les demandes de brevet français références FR3053396A1 et FR3069021A1.

## Présentation générale de l'invention

Un but général de l'invention est de proposer une régulation du débit de carburant avec une plus grande précision de dosage.

Un autre but de l'invention est de permettre un dimensionnement optimisé du moteur et du circuit d'alimentation et un gain de masse sur l'un et l'autre.

Un autre but de l'invention est de permettre de dimensionner l'actionneur de dosage et les éléments du moteur indépendamment de la nature et de la température du carburant.

Une amélioration de la précision du dosage se répercute sur un meilleur dimensionnement du moteur et en particulier par exemple du module de compression d'air de celui-ci.

Un compresseur plus optimisé est plus efficace et améliore la consommation de carburant spécifique du moteur.

Ceci diminue en outre la quantité de carburant à emporter pour une manoeuvre similaire.

Également, le gain de masse qui en résulte avion a pour conséquence une réduction de la puissance à délivrer par les moteurs pour assurer la poussée pour l'aéronef.

En dehors de la taille du moteur réduite, la consommation de carburant sera plus faible.

Une amélioration de la précision de dosage permet en outre une réduction de la quantité de carburant recirculé dans le circuit carburant, limité par le besoin de refroidissement de l'huile moteur.

Également, le fait que moins de carburant soit recirculé entraîne une simplification du système carburant et donc gain de masse.

Ainsi, selon un aspect, l'invention propose un procédé de dosage de carburant dans un circuit d'alimentation en carburant d'un moteur d'aéronef, ledit circuit comportant un dispositif de dosage pour circuit de carburant de moteur d'aéronef comportant, en aval d'un système de pompage de carburant et en amont d'injecteurs :

- une entrée de carburant,

- un organe doseur et un organe de coupure disposés en série,

- une soupape régulatrice disposée sur une branche de recirculation de carburant, pour que du carburant fourni en excès par le système de pompage soit refoulé dans le circuit de carburant,

Au moins un capteur débit-métrique est disposé sur la branche de recirculation et on détermine une valeur densité du carburant dosé en fonction des mesures dudit capteur et on commande l'organe doseur en fonction de la valeur de densité de carburant ainsi déterminée.

Notamment, on détermine un débit massique et un débit volumique en fonction des signaux mesurés par le capteur débit-métrique, la valeur de densité de carburant dosé étant déterminé comme égale au rapport entre le débit massique et le débit volumique ainsi déterminés.

Un débit dosé peut être calculé par soustraction au débit pompé du débit recirculé vu par le capteur débit-métrique sur la branche de recirculation

En variante, au moins un capteur débit-métrique est disposé en aval du dispositif de dosage et on détermine une autre valeur de densité du carburant dosé en fonction des mesures de ce capteur et on commande l'organe doseur en fonction de cette valeur de densité de carburant, ainsi que de la valeur de densité de carburant déterminée en fonction des mesures du capteur disposé sur la branche de recirculation.

L'invention concerne en outre un circuit d'alimentation en carburant d'un moteur d'aéronef.

Elle concerne un moteur d'aéronef, notamment une turbomachine, comportant un tel circuit et un avion comportant un tel moteur.

**Brève description des dessins**

D'autres caractéristiques et avantages de l'invention ressortiront encore de la description qui suit, laquelle est purement illustrative et non limitative, et doit être lue en regard des figures annexées sur lesquelles :

- la figure 1 est un graphe sur lequel on a porté, pour différents carburants, les courbes les densités de ces carburants en fonction de la température ;

- la figure 2 est une représentation schématique d'un exemple d'architecture générale déjà connue de circuit d'alimentation en carburant de la chambre de combustion d'un moteur d'avion ;

- la figure 3 est une représentation schématique d'un système de dosage FMU associé à un capteur pour la mise en oeuvre de l'invention ;

- la figure 4 illustre un principe général pour une mise en oeuvre de l'invention ;

- la figure 5 illustre une mise en oeuvre de l'invention par un calculateur de contrôle moteur.

**Description d'un ou plusieurs modes de mise en oeuvre et de réalisation**

Rappels sur les circuits d'alimentation en carburant

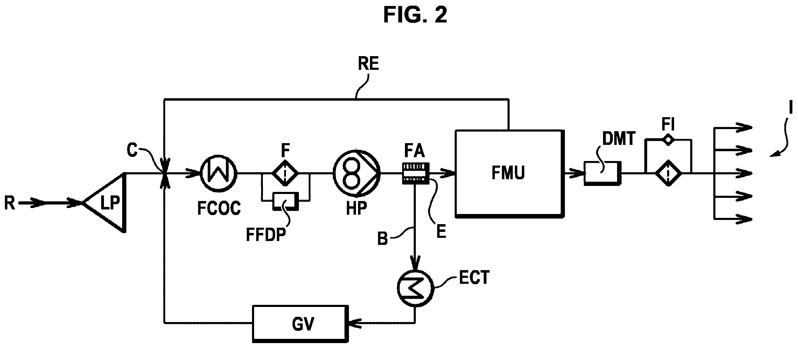

Le circuit d'alimentation représenté sur la figure 2 correspond à une architecture générale classiquement connue. Il comporte en série, dans le sens de circulation du carburant : une pompe basse pression LP, un échangeur de chaleur principal FCOC ou « Fuel Oil Exchanger » utilisant le carburant comme source froide, un filtre de carburant F, une pompe haute pression HP, et l'unité de dosage carburant FMU.

La pompe haute pression HP est par exemple une pompe à engrenages dont le déplacement fixe est optimisé sur le régime moteur de la turbomachine au décollage.

Outre l'alimentation de la chambre de combustion, la pompe haute pression HP alimente également en carburant les « géométries variables » GV du moteur, lesquelles sont des équipements ou organes de turbomachine qui comprennent des éléments mobiles, nécessitant de prélever une puissance hydraulique variable pour fonctionner.

Ces équipements ou organes GV peuvent être de natures diverses, par exemple un vérin, une servovalve, une soupape de décharge ajustable de compresseur, une soupape de décharge transitoire de compresseur, et/ou une soupape de réglage de débit d'air pour un système de réglage de jeu au sommet d'aubes de rotor pour turbine basse pression ou turbine haute pression.

À cet effet, du carburant est dérivé du circuit d'alimentation en carburant, sur une branche B d'alimentation des « géométries variables », qui s'étend entre un noeud E situé entre la pompe HP et l'unité de dosage FMU et un noeud C situé entre la pompe basse pression LP et la pompe volumétrique haute pression HP.

Au niveau du noeud E, le circuit d'alimentation illustré comporte un filtre autolavable FA, pour filtrer la fraction de débit de carburant dérivée. Ce filtre FA est lavé par le flux de carburant circulant dans le circuit d'alimentation vers l'unité de dosage de carburant FMU. La branche B peut en outre comprendre, en amont des équipements GV, un échangeur de chaleur ECT pour le contrôle en température du carburant dérivé.

Le circuit d'alimentation de la chambre de combustion comporte aussi un circuit de récupération RE, également appelé branche de recirculation de carburant, reliant l'unité de dosage de carburant FMU au circuit d'alimentation, entre la pompe basse pression LP et l'échangeur de chaleur FCOC (nœud C par exemple). L'excès de débit de carburant fourni à l'unité de dosage de carburant FMU peut ainsi être retourné, à travers ce circuit de récupération RE, en amont de l'échangeur de chaleur FCOC, sur le filtre principal de carburant F et la pompe haute pression HP.

Ainsi, en fonctionnement, le carburant provenant d'un réservoir R est aspiré par la pompe basse pression LP et pompé dans le circuit d'alimentation. Dans ce circuit d'alimentation, il est d'abord refroidi à l'échangeur de chaleur principal FCOC, et ensuite filtré dans le filtre de carburant F. En aval de ce filtre F, il est aspiré par la pompe haute pression HP, et pompé, sous haute pression, vers le branchement (nœud E), dans lequel une fraction du débit de carburant est dérivée du circuit d'alimentation vers les équipements GV et passe par le filtre autolavable FA.

Le reste du débit de carburant traverse le filtre autolavable FA, vers l'unité de dosage de carburant FMU, en nettoyant ledit filtre FA. L'unité FMU assure quant à elle notamment le dosage du débit de carburant fourni à la chambre de combustion à travers les injecteurs I, via par exemple un débitmètre DMT relié au calculateur de contrôle EEC et des filtres d'injection FI disposés en amont des injecteurs I.

### Architecture d'un système FMU

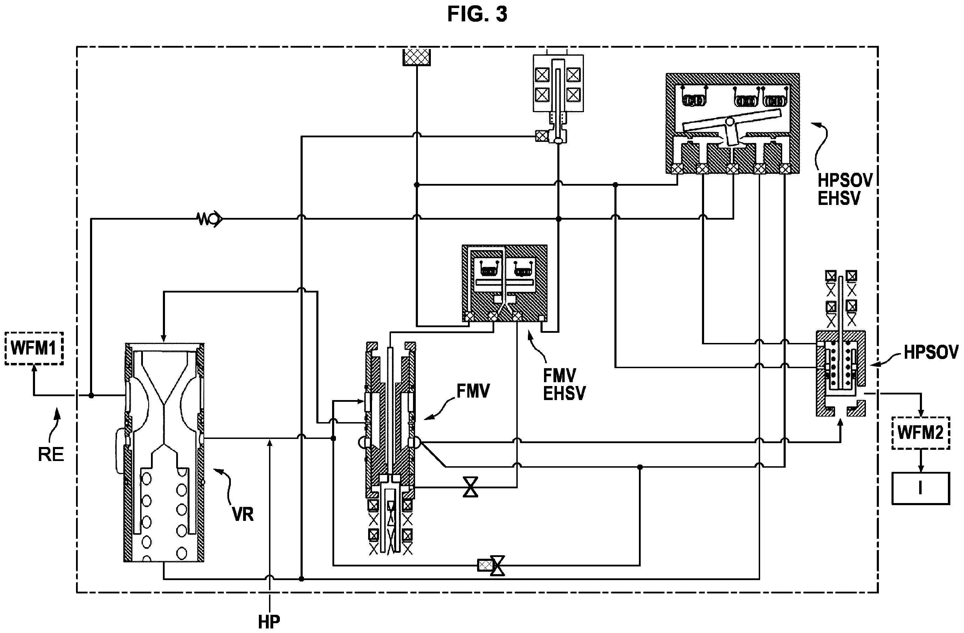

Le système de dosage FMU illustré sur la figure 3 est placé dans un circuit d'alimentation en carburant d'un moteur, en aval d'un système de pompage de carburant (pompe HP) et en amont des injecteurs I qu'il alimente.

Une soupape régulatrice VR est située en entrée du système de dosage, sur la branche qui assure le refoulement de recirculation du carburant.

Cette soupape régulatrice VR assure un différentiel de pression constant aux bornes du FMU.

Cette soupape régulatrice VR - classiquement appelée « by-pass valve » selon la terminologie anglosaxonne - est un organe purement passif qui grâce à une contre pression d'un ressort permet de maintenir un certain différentiel de pression entre l'entrée du FMU et la sortie du SOV.

Le ressort dans la soupape (exemple ci-dessous) agit contre un piston (tiroir) de part et d'autre duquel du carburant est à des pressions différentes.

Le dosage du débit se fait quant à lui grâce à un organe doseur généralement appelé FMV (pour « Fuel Metering Valve »). Cet organe est piloté par le calculateur de contrôle EEC au travers d'une servovalve, lequel évalue le débit massique dosé Q par la formule suivante de calcul du débit traversant un orifice :

$$Q = K_S * S\sqrt{\rho * \Delta P}$$

où $\Delta P$ est le différentiel de pression, S la surface de l'orifice laissant passer le fluide carburant dans le FMV, $\rho$ la densité dudit fluide et Ks un paramètre lié au FMV.

Ledit organe doseur FMV comporte classiquement un tiroir mobile, associé à un capteur de position linéaire LVDT (pour « Linear Variable Differential Transducer ») - cas illustré sur la figure 2 - ou rotatif RVDT (pour « Rotary Variable Differential Transducer »).

La position du tiroir telle que mesurée par le capteur LVDT ou RVDT est transmise au calculateur de contrôle EEC qui commande le déplacement du tiroir via une servovalve (FMV EHSV sur la figure 2) : le débit dosé est fonction de la position du tiroir mobile, puisque le différentiel de pression est maintenu constant.

En sortie, le FMU comporte un clapet-stop HPSOV (pour « High Pressure Shut-Off Valve »), qui d'une part permet de pressuriser le circuit de carburant et d'autre part permet de couper le débit d'injection (par exemple en cas de détection d'une survitesse du moteur).

Comme l'organe doseur, le clapet-stop HPSOV comprend un capteur de position LVDT ou RVDT envoyant une information de position au calculateur de contrôle EEC de contrôle moteur. Le déplacement dudit clapet HPSOV est commandé par le calculateur via une servovalve HPSOV EHSV.

### Amélioration de la précision du dosage

Le système de dosage FMU est en outre complété par un capteur débitmètre WFM1 disposé en amont de la soupape régulatrice VR, sur la boucle de recirculation RE.

Ce débitmètre WFM1 permet à la fois une mesure du débit massique et une mesure du débit volumique.

Ces deux informations sont traitées par l'EEC pour déterminer la densité de carburant par simple division du débit massique mesuré par le débit volumique également mesuré.

Le capteur de débit massique WFM1 est par exemple un capteur à deux rotors du type de ceux décrits dans le brevet US 3.144.769, ou encore un capteur à tambour et rouet tel que décrit dans le brevet EP 0.707.199 (technologie Crane - https: //www.craneae.com/Products/Fluid/FlowmeterWorks.aspx).

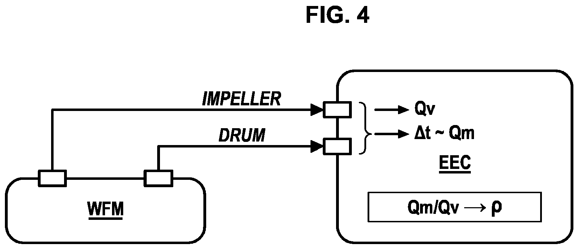

Comme l'illustre la figure 4 dans le cas où le capteur WFM1 comprend une sortie tambour (DRUM) et une sortie rouet (IMPELLER), la vitesse de rotation du tambour et du rouet est proportionnelle au débit volumique Qv, tandis que le décalage temporel $\Delta T$ entre le tambour et le rouet est proportionnel au débit massique Qm.

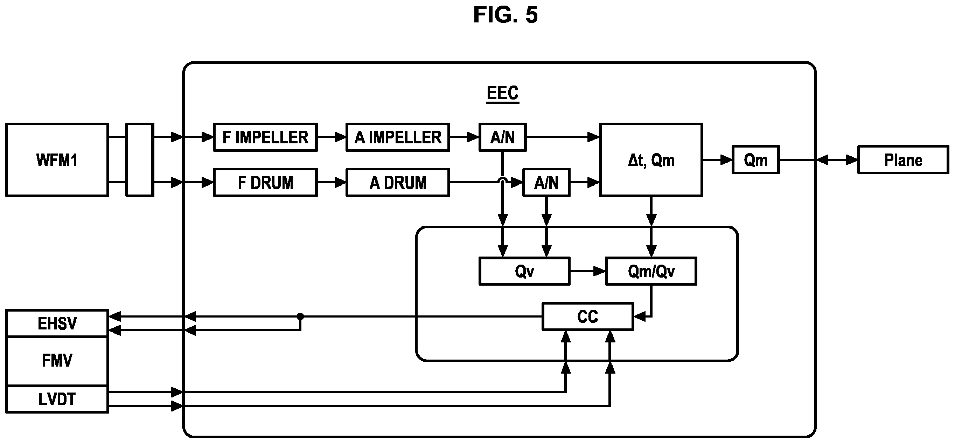

Comme l'illustre la figure 5, le calculateur EEC reçoit du capteur WFM les signaux des solénoïdes de celui-ci qui suivent la rotation du tambour (DRUM) et la rotation du rouet (IMPELLER).

Après filtrage (F IMPELLER ; F DRUM) et amplification (A IMPELLER ; A DRUM), ces signaux sont numérisés (A/N). L'EEC consolide les signaux du tambour (DRUM) et du rouet (IMPELLER) pour en déduire le débit volumique Qv, qui traverse le capteur WFM. Il compare les signaux du tambour (DRUM) et du rouet (IMPELLER) pour en déduire le décalage temporel ΔT de rotation entre l'un et l'autre, et le débit massique Qm (qui est envoyé au calculateur de l'avion (Plane).

Il calcule ensuite le rapport Qm/Qv qui correspond à la densité de carburant.

En fonction de la densité de carburant ainsi déterminée, ainsi que de l'ouverture 5 de l'organe de dosage que lui fournit le capteur LVDT, le calculateur EEC calcule le débit Q dosé par l'organe de dosage grâce à la formule :

$$Q = K_S * S\sqrt{\rho * \Delta P}$$

déjà indiquée ci-dessus.

Le calculateur EEC détermine ensuite un courant de commande CC de la servovalve FMV EHSV, afin de réguler le déplacement du tiroir du dispositif de dosage FMV pour qu'il corresponde au dosage à commander.

De cette façon, la commande du dosage de carburant est faite avec une plus grande précision que dans le cas d'un débit dosé tel que classiquement reconstitué.

Dans un mode de mise en oeuvre avantageux, on utilise également le capteur de débit massique en aval du FMU pour accéder à une deuxième valeur de débit. Cette deuxième valeur assure une redondance.

On notera qu'une telle solution permet un débit soutenu tout au long du vol sans exploration des très bas débits et sans transitoire rapide.

En particulier, la densité calculée n'est pas perturbée par les changements de régime du moteur et les écarts de pression.

Une telle amélioration de la précision de dosage permet un meilleur dimensionnement du module de compression d'air du moteur. Le compresseur étant plus optimisé, la consommation de carburant du moteur est améliorée. Il en résulte une diminution de la quantité de carburant à emporter, ainsi qu'un gain de masse pour l'avion qui a pour conséquence une réduction de la puissance nécessaire à délivrer pour assurer la poussée de l'aéronef.

En outre, la taille du moteur étant réduite, la consommation de carburant est plus faible. Un meilleur dosage permet en outre une réduction de la quantité de carburant recirculé, ce qui entraîne une simplification du système de carburant, et là encore, un gain de masse pour le moteur.

Également encore, la connaissance plus précise de la densité du carburant permet de fortement simplifier la conception de la compensation de la température dans le bloc hydraulique. Dans le circuit d'alimentation de la figure 2, l'échangeur de chaleur FCOC et l'échangeur ECT peuvent être dimensionnés de façon moins importante que dans le cas des solutions antérieures.

Dans un mode de mise en oeuvre avantageux, on utilise également le capteur de débit massique en aval du FMU pour accéder à une deuxième valeur de densité de débit. Ce capteur (WFM2 sur la figure 2) est lui aussi de technologie Crane ou similaire. La deuxième valeur de densité qu'il permet d'obtenir assure une redondance.

En variante encore, si le débit pompé par le système de pompage en aval du FMU est connu du calculateur EEC, le débit dosé à transmettre au calculateur peut être calculé par sous traction audit débit pompé du débit recirculé vu par le capteur WFM1. Le capteur aval WFM2 peut alors être supprimé.

## Revendications

1. Procédé de dosage de carburant dans un circuit d'alimentation en carburant d'un moteur d'aéronef, ledit circuit comportant un dispositif de dosage pour circuit de carburant de moteur d'aéronef comportant, en aval d'un système de pompage de carburant et en amont d'injecteurs :

        - une entrée de carburant (E),
        - un organe doseur (FMV) et un organe de coupure (HPSOV) disposés en série,
        - une soupape régulatrice (VR) disposée sur une branche de recirculation de carburant, pour que du carburant fourni en excès par le système de pompage soit refoulé dans le circuit de carburant,

   **caractérisé en ce qu'**au moins un capteur débitmétrique (WFM1) étant disposé sur la branche de recirculation, on détermine une valeur densité du carburant dosé en fonction des mesures dudit capteur et on commande l'organe doseur en fonction de la valeur de densité de carburant ainsi déterminée.

2. Procédé de dosage de carburant selon la revendication 1, dans lequel on détermine un débit massique et un débit volumique en fonction des signaux mesurés par le capteur débit-métrique, la valeur de densité de carburant dosé étant déterminé comme égale au rapport entre le débit massique et le débit volumique ainsi déterminés.

3. Procédé de dosage de carburant selon l'une des revendications 1 ou 2, dans lequel un débit dosé est calculé par soustraction au débit pompé du débit recirculé vu par le capteur débit-métrique sur la branche de recirculation.

4. Procédé de dosage de carburant selon l'une des revendications 1 ou 2, dans lequel au moins un capteur débit-métrique (WFM2) étant disposé en aval du dispositif de dosage, on détermine une autre valeur de densité du carburant dosé en fonction des mesures de ce capteur et on commande l'organe doseur en fonction de cette valeur de densité de carburant, ainsi que de la valeur de densité de carburant déterminée en fonction des mesures du capteur disposé sur la branche de recirculation.

5. Circuit d'alimentation en carburant d'un moteur d'aéronef, ledit système comportant un dispositif de dosage pour circuit de carburant de moteur d'aéronef comportant, en aval d'un système de pompage de carburant et en amont d'injecteurs :

   - une entrée de carburant (E),
   - un organe doseur (FMV) et un organe de coupure (HPSOV) disposés en série,
   - une soupape régulatrice (VR) disposée sur une branche de recirculation de carburant, pour que du carburant fourni en excès par le système de pompage soit refoulé dans le circuit de carburant,
   - un calculateur pour la commande de l'organe doseur et de la soupape régulatrice,

   dans lequel au moins un capteur débit-métrique (WFM1) est disposé sur la branche de recirculation, le calculateur étant adapté pour commander l'organe doseur en mettant en oeuvre le procédé de dosage selon l'une des revendications 1 à 3.

6. Circuit d'alimentation selon la revendication 5, dans lequel au moins un capteur débit-métrique (WFM2) est disposé en aval du dispositif de dosage, le calculateur étant adapté pour commander l'organe doseur en mettant en oeuvre le procédé de dosage selon la revendication 4.

7. Moteur d'aéronef, notamment turbomachine, comportant un circuit d'alimentation selon l'une des revendications 5 ou 6.

8. Avion comportant un moteur d'aéronef selon la revendication 7.

**Patentansprüche**

1. Verfahren zur Dosierung von Kraftstoff in einem Kraftstoffversorgungskreis eines Flugzeugtriebwerks, wobei der Kreis eine Dosiervorrichtung für einen Flugzeugtriebwerk-Kraftstoffkreis aufweist, die einem Kraftstoffpumpsystem nachgelagert und Injektoren vorgelagert aufweist:

   - einen Kraftstoffeinlass (E),

   - ein Dosierelement (FMV) und ein Schaltelement (HPSOV), die in Reihe angeordnet sind,
   - ein Regulierventil (VR), das auf einer Kraftstoffrückführungsabzweigung angeordnet ist, damit vom Pumpsystem überschüssig bereitgestellter Kraftstoff in den Kraftstoffkreis zurückbefördert wird,

   **dadurch gekennzeichnet, dass** mindestens ein Volumenstromsensor (WFM1) auf der Rückführungsabzweigung angeordnet ist, ein Dichtewert des dosierten Kraftstoffs in Abhängigkeit von den Messungen des Sensors bestimmt und das Dosierelement in Abhängigkeit von dem somit bestimmten Kraftstoffdichtewert gesteuert wird.

2. Verfahren zur Dosierung von Kraftstoff nach Anspruch 1, wobei ein Massestrom und ein Volumenstrom in Abhängigkeit von den vom Volumenstromsensor gemessenen Signalen bestimmt wird, wobei der Dichtewert des dosierten Kraftstoffs als gleich dem Verhältnis zwischen dem somit bestimmten Massestrom und Volumenstrom bestimmt wird.

3. Verfahren zur Dosierung von Kraftstoff nach einem der Ansprüche 1 oder 2, wobei ein dosierter Strom durch Subtraktion des vom Volumenstromsensor auf der Rückführungsabzweigung erfassten zurückgeführten Stroms vom gepumpten Strom berechnet wird.

4. Verfahren zur Dosierung von Kraftstoff nach einem der Ansprüche 1 oder 2, wobei mindestens ein Volumenstromsensor (WFM2) der Dosiervorrichtung nachgelagert angeordnet ist, ein anderer Dichtewert des dosierten Kraftstoffs in Abhängigkeit von den Messungen dieses Sensors bestimmt wird und das Dosierelement in Abhängigkeit von diesem Kraftstoffdichtewert sowie von dem in Abhängigkeit von den Messungen des auf der Rückführungsabzweigung angeordneten Sensors bestimmten Kraftstoffdichtewert gesteuert wird.

5. Kraftstoffversorgungskreislauf eines Flugzeugtriebwerks, wobei das System eine Kraftstoffkreis-Dosiervorrichtung eines Flugzeugtriebwerks aufweist, die einem Kraftstoffpumpsystem nachgelagert und Injektoren vorgelagert aufweist:

   - einen Kraftstoffeinlass (E),
   - ein Dosierelement (FMV) und ein Schaltelement (HPSOV), die in Reihe angeordnet sind,
   - ein Regulierventil (VR), das auf einer Kraftstoffrückführungsabzweigung angeordnet ist, damit vom Pumpsystem überschüssig bereitgestellter Kraftstoff in den Kraftstoffkreis zurückbefördert wird,
   - einen Rechner zum Steuern des Dosierelements und des Regulierventils,

wobei mindestens ein Volumenstromsensor (WFM1) auf der Rückführungsabzweigung angeordnet ist, wobei der Rechner zum Steuern des Dosierelements geeignet ist, indem er das Verfahren nach einem der Ansprüche 1 bis 3 durchführt.

**6.** Versorgungskreis nach Anspruch 5, wobei mindestens ein Volumenstromsensor (WFM2) der Dosiervorrichtung nachgelagert angeordnet ist, wobei der Rechner zum Steuern des Dosierelements geeignet ist, indem er das Dosierverfahren nach Anspruch 4 durchführt.

**7.** Flugzeugtriebwerk, insbesondere Turbomaschine, das einen Versorgungskreislauf nach einem der Ansprüche 5 oder 6 aufweist.

**8.** Flugzeug, das ein Flugzeugtriebwerk nach Anspruch 7 aufweist.

**Claims**

**1.** A method of metering fuel in an aircraft engine fuel supply system, said system comprising a metering device for an aircraft engine fuel system comprising, downstream of a fuel pumping system and upstream of injectors:

- a fuel inlet (E),
- a metering device (FMV) and a shut-off device (HPSOV) arranged in series,
- a regulating valve (VR) arranged on a fuel recirculation branch, so that excess fuel supplied by the pumping system is pumped back into the fuel system,

**characterized in that** at least one flow meter sensor (WFM1) being arranged in the recirculation branch, a density value of the metered fuel is determined as a function of the measurements of the said sensor, and the metering device is controlled as a function of the fuel density value thus determined.

**2.** A method of metering fuel according to claim 1, wherein a mass flow rate and a volume flow rate are determined as a function of the signals measured by the flow meter sensor, the density value of the metered fuel being determined as equal to the ratio of the mass flow rate and the volume flow rate thus determined.

**3.** A method of metering fuel according to any of claims 1 or 2, wherein a metered flow rate is calculated by subtracting from the pumped flow rate the recirculation flow rate seen by the flow meter sensor on the recirculation branch.

**4.** Method for metering fuel according to one of claims 1 or 2, in which at least one flow meter sensor (WFM2) being arranged downstream of the metering device, a further density value of the metered fuel is determined as a function of the measurements of this sensor, and the metering device is controlled as a function of this fuel density value and the fuel density value determined as a function of the measurements of the sensor arranged in the recirculation branch.

**5.** A fuel supply system for an aircraft engine, said system comprising a metering device for an aircraft engine fuel system comprising, downstream of a fuel pumping system and upstream of injectors:

- a fuel inlet (E),
- a metering device (FMV) and a cut-off device (HPSOV) arranged in series,
- a regulating valve (VR) arranged on a fuel recirculation branch, so that excess fuel supplied by the pumping system is pumped back into the fuel system,
- a computer for controlling the metering device and the regulating valve,

wherein at least one flow meter sensor (WFM1) is arranged on the recirculation branch, the computer being adapted to control the metering device by implementing the metering method according to one of claims 1 to 3.

**6.** The feed circuit of claim 5, wherein at least one flow meter sensor (WFM2) is disposed downstream of the metering device, the computer being adapted to control the metering device by implementing the metering process of claim 4.

**7.** An aircraft engine, in particular a turbomachine, comprising a supply circuit according to one of claims 5 or 6.

**8.** An aircraft comprising an aircraft engine as claimed in claim 7.

**Densité min / max de carburants en fonction de la température**

FIG. 1

Densité (kg/m$^3$)

Température (°C)

Jet A / A1 / JP8 max    JP5 max    Jet D / JP4 max    TS1 / RT max
Jet A / A1 / JP8 min    JP5 min    Jet D / JP4 min    TS1 / RT min
RT min

EP 3 994 347 B1

FIG. 2

EP 3 994 347 B1

FIG. 3

**FIG. 4**

**FIG. 5**

EP 3 994 347 B1

**EP 3 994 347 B1**

**RÉFÉRENCES CITÉES DANS LA DESCRIPTION**

**Documents brevets cités dans la description**

- FR 3053396 A1
- FR 3069021 A1
- US 3144769 A
- EP 0707199 A